# EUROPÄISCHE PATENTSCHRIFT

(11) **EP 3 494 321 B1**
(45) Veröffentlichungstag und Bekanntmachung des Hinweises auf die Patenterteilung: **08.07.2020**
(21) Anmeldenummer: 17751992.3
(22) Anmeldetag: 31.07.2017
(51) Int. Cl.: F16D 13/70, F16D 13/75

(54) **KUPPLUNG ZUR VEREINFACHTEN MONTAGE**
CLUTCH FOR SIMPLIFIED INSTALLATION
EMBRAYAGE À MONTAGE SIMPLIFIÉ

(30) Priorität: 04.08.2016 DE 102016214442; 13.10.2016 DE 102016219998
(43) Veröffentlichungstag der Anmeldung: 12.06.2019
(73) Patentinhaber: Schaeffler Technologies AG & Co. KG, 91074 Herzogenaurach (DE)
(72) Erfinder: GRUMER, Friederike, 77855 Achern (DE)
(86) Internationale Anmeldenummer: PCT/DE2017/100638
(87) Internationale Veröffentlichungsnummer: WO 2018/024290

(56) Entgegenhaltungen:
- DE-A1- 3 221 971
- DE-A1-102011 018 590
- US-A- 5 924 538
- US-A- 6 024 199

## Beschreibung

Die Erfindung betrifft eine Kupplung gemäß dem Oberbegriff des Patentanspruchs 1 für einen Antriebsstrang eines Kraftfahrzeuges, wie eines motorgetriebenen Zweirades / Motorrades, Pkws, etc., mit einer Druckplattenbaugruppe, wobei die Druckplattenbaugruppe weiterhin einen Kupplungsdeckel, eine verschiebbar an dem Kupplungsdeckel aufgenommene Anpressplatte, eine zwischen dem Kupplungsdeckel und der Anpressplatte abgestützte Tellerfeder sowie ein Druckelement, das zum Betätigen der Tellerfeder an einem radial innenliegenden Randbereich der Tellerfeder anliegt, aufweist. Auch betrifft die Erfindung ein Kupplungssystem mit einer Kupplung sowie einem die Kupplung zwischen einer eingekuppelten Stellung und einer ausgekuppelten Stellung verstellenden Betätigungssystem.

Kupplungen sowie Kupplungssysteme sind aus dem Stand der Technik bereits hinlänglich bekannt. Die DE 10 2014 201 734 A1 offenbart bspw. eine Kupplungsstellvorrichtung für eine Reibungskupplung, mit einem Gehäuse und einer über eine Lagervorrichtung am Gehäuse kippbar angebundenen Stelleinrichtung. Die Stelleinrichtung ist zum Hervorrufen einer Axialbewegung einer Anpressplatte an der Lagervorrichtung angebunden. Eine Kompensationseinheit ist zwischen dem Gehäuse und der Stelleinrichtung angeordnet und steht mit beiden in kraftübertragenden Kontakt. Zudem ist die Kompensationseinheit so angeordnet, dass sie beim Verkippen der Stelleinrichtung auf Kompression belastet ist.

Bekannte Kupplungen, etwa Einscheiben-Trockenkupplungen, sind jedoch relativ aufwändig im Antriebsstrang zu montieren. Zumeist müssen die einzelnen Bestandteile der Kupplung beim Endausrüster separat und nacheinander im Antriebsstrang, d.h. kurbelwellenseitig bzw. getriebeseitig montiert werden. Zudem ist es bei den bekannten Kupplungen häufig der Fall, dass diese bei zunehmendem Verschleiß der Reibbeläge mit relativ großen Handhebelkräften zu betätigen sind.

Aus der DE 10 2011 018590 A1 ist eine Kupplung bekannt, die auf den Oberbegriff des Patentanspruchs 1 lesbar ist.

Es ist Aufgabe der vorliegenden Erfindung, die aus dem Stand der Technik bekannten Nachteile zu beheben und insbesondere eine Kupplung zur Verfügung zu stellen, die einerseits besonders einfach im Antriebsstrang montierbar sein soll, andererseits im Betrieb auch möglichst geringe Handhebelkräfte hervorrufen soll.

Diese Aufgabe wird erfindungsgemäß durch eine Kupplung gemäß Patentanspruch 1 gelöst, wobei das Druckelement mit mehreren ersten Durchgangslöchern und der Kupplungsdeckel mit mehreren zweiten Durchgangslöchern versehen sind, wobei jedes erste Durchgangsloch in axialer Richtung der Kupplung fluchtend / in Flucht zu einem zweiten Durchgangsloch ausgerichtet ist.

Somit kann die Druckplattenbaugruppe im Ganzen im Antriebsstrang montiert werden. Dies reduziert die Montageschritte deutlich. Zugleich, da die Druckplattenbaugruppe bereits werksseitig präzise vormontiert ist, sind die einzelnen Kupplungsbestandteile bereits präzise voreingestellt, sodass sich dies auch positiv auf eine weitestgehende Reduzierung der Handhebelkraft auswirkt.

Weitere vorteilhafte Ausführungsformen sind in den Unteransprüchen beansprucht und nachfolgend näher erläutert.

Wenn das Druckelement einen sich in radialer Richtung (der Kupplung / einer Drehachse der Kupplung), vorzugsweise nach innen, von der Tellerfeder wegerstreckenden Scheibenbereich aufweist, in dem die (vorzugsweise in einer Umfangsrichtung der Kupplung verteilt angeordneten) ersten Durchgangslöcher eingebracht sind, sind das Druckelement und damit auch die Kupplung im Aufbau besonders einfach gehalten.

Der Kupplungsdeckel weist einen die Tellerfeder in radialer Richtung nach innen überragenden Flanschbereich auf, in dem die (vorzugsweise in Umfangsrichtung der Kupplung verteilt angeordneten) zweiten Durchgangslöcher eingebracht sind. Dadurch wird der Aufbau der Kupplung weiter vereinfacht.

Ist eine Kupplungsscheibe vorhanden, deren Nabenbereich mehrere (vorzugsweise in Umfangsrichtung der Kupplung verteilt angeordnete) dritte Durchgangslöcher aufweist, kann die gesamte Kupplung in einem Schritt im Antriebsstrang montiert werden.

Wenn jedes dritte Durchgangsloch mit einem ersten Durchgangsloch und/oder einem zweiten Durchgangsloch fluchtet, lässt sich jedes im Kupplungsdeckel einzubringendes Befestigungsmittel, etwa eine Schraube, mittels eines Werkzeuges von außen einfach montieren.

Von Vorteil ist es weiterhin, wenn die zweiten Durchgangslöcher im Kupplungsdeckel im Durchmesser kleiner als die ersten Durchgangslöcher im Druckelement (und/oder als die dritten Durchgangslöcher in dem Nabenbereich) sind. Dadurch sind die Durchgangslöcher im Kupplungsdeckel zum Führen der Befestigungsmittel optimiert.

Weist die Kupplung weiterhin eine ringförmige Gegendruckplatte auf, deren Innendurchmesser größer ist als ein Außendurchmesser eines gedachten (in einer Umfangsrichtung um die Drehachse verlaufenden) Kreises, auf dem die Durchgangslöcher des Kupplungsdeckels, des Druckelements und/oder des Nabenbereichs angeordnet sind, wird der Zugang des Werkzeuges zur Montage weiter erleichtert.

Ist das Druckelement durch eine Zusatzfeder, vorzugsweise eine Servofeder, abgestützt, wird die Handhebelkraft / Ausrückkraft weiter reduziert. Besonders vorteilhaft ist dabei, dass durch den Einsatz einer Servofeder kaum ein Kraftanstieg des Handhebels über die Lebensdauer auftritt.

Zudem ist es vorteilhaft, wenn das Druckelement zwischen der Tellerfeder und der Zusatzfeder angeordnet ist und/oder an einem oder an mehreren Zentrierbolzen zum Zentrieren der Tellerfeder zentriert ist. Dadurch wird ein besonders kompakter Aufbau der Kupplung erreicht.

Ist der Kupplungsdeckel aus einem Gusswerkstoff, vorzugsweise einem Eisenguss oder einem Stahlguss, hergestellt, ist der Kupplungsdeckel besonders geschickt als Schwungmasse ausgeführt.

Diesbezüglich ist es auch vorteilhaft, wenn die Gegendruckplatte aus einem Gusswerkstoff, vorzugsweise einem Eisenguss oder einem Stahlguss, hergestellt und/oder als Schwungrad ausgeführt ist. Insbesondere durch diese materielle Ausgestaltung der Gegendruckplatte wird eine höhere Steifigkeit und eine höhere Schwungmasse erzielt.

Der Nabenbereich der Kupplungsscheibe ist zudem bevorzugt als Schmiedenabe, besonders bevorzugt als einteilige Schmiedenabe, ausgebildet.

Durch diese Maßnahmen wird der Aufbau der Kupplung noch robuster ausgeführt.

Besonders vorteilhaft ist es, wenn die Kupplung als eine trockene / trocken laufende Reibungskupplung ausgestaltet ist. Dadurch ist die Kupplung besonders effizient wirkend.

Von Vorteil ist es weiterhin, wenn die Kupplung zusätzlich oder alternativ als Einscheibenkupplung ausgebildet ist. Alternativ hierzu ist auch eine Ausbildung der Kupplung als eine Mehrscheibenkupplung denkbar, solange eine Betätigung dieser über die Tellerfeder erfolgt. Auch eine Ausbildung als Servokupplung macht die Kupplung in ihrer Wirkweise besonders effektiv.

Des Weiteren betrifft die Erfindung ein Kupplungssystem mit einer Kupplung nach zumindest einer der zuvor beschriebenen Ausführungsformen sowie einem die Kupplung zwischen einer eingekuppelten Stellung und einer ausgekuppelten Stellung verstellenden Betätigungssystem, welches Betätigungssystem wiederum ein Betätigungselement aufweist, das, die Kupplung teilweise durchragend, verschiebefest mit dem Druckelement gekoppelt ist. Das Betätigungselement ist etwa als Druckstange oder als Zugelement ausgebildet. Dadurch ist auch ein Kupplungssystem besonders effektiv aufgebaut.

In anderen Worten ausgedrückt, ist somit bevorzugt erfindungsgemäß eine trockene Motorradkupplung mit einer Kupplungsscheibe ausgestaltet, die als Servokupplung ausgebildet ist. Um die Montage der Kupplungen beim Motorradhersteller zu vereinfachen, kann die gesamte, fertig montierte Kupplung, aufweisend die Druckplattenbaugruppe mit dem vorzugsweise aus Guss bestehenden Kupplungsdeckel, die Kupplungsscheibe und die als Schwungrad ausgebildete Gegendruckplatte, an der Kurbelwelle des Verbrennungsmotors befestigt werden. Die Nabe der Kupplungsscheibe, das Druckblech (Druckelement), das auf die Tellerfeder wirkt, und der Kupplungsdeckel sind mit in Umfangsrichtung verteilt angeordneten Durchgangslöchern ausgestattet, durch die die Befestigungsmittel, insbesondere Verbindungsbolzen, bei der Montage gesteckt werden, sodass der Kupplungsdeckel mit der Kurbelwelle verschraubt wird, ohne die Kupplung dabei zuvor zerlegen zu müssen. Für den Fall, dass die Kupplung nicht als Einheit vom Motorradhersteller montiert werden soll, sondern dass zuerst die Druckplattenbaugruppe und danach erst die Kupplungsscheibe und die Gegendruckplatte montiert werden sollen, ist in einer weiteren Ausführung zumindest das Druckblech und der Kupplungsdeckel mit Durchgangslöchern ausgestattet. Dies ist etwa durch Kosteneinsparungen notwendig, wenn die Scheibennabe (Nabenbereich) als zweiteilige Ausführung verwendet wird.

Desweiteren ist der Durchmesser der Durchgangslöcher im Kupplungsdeckel vorzugsweise geringer als der Durchmesser der Durchgangslöcher im Druckblech und ggf. in der Nabe (Nabenbereich) der Kupplungsscheibe. Die Gegendruckplatte ist ringförmig ausgebildet, wobei der Innendurchmesser des Rings größer als der Außendurchmesser des Kreises ist, auf dem die Durchgangslöcher in der Anpressplatte angeordnet sind. Das Druckblech ist vorzugsweise zwischen der Tellerfeder und einer Zusatzfeder, die insbesondere als Servofeder ausgebildet ist und sich an dem Tellerfederzentrierbolzen (Zentrierbolzen) abstützt, in Position gehalten. Die Nabe der Kupplungsscheibe ist vorzugsweise als einteilige Schmiedenabe ausgebildet, durch die sich die Durchgangslöcher erstrecken. Die Betätigung der Kupplung erfolgt vorzugsweise von Seiten des Getriebes durch eine Druckstange, die sich durch die Getriebeeingangswelle erstreckt und auf das Druckblech wirkt, um die Kupplung auszurücken. Alternativ wäre aber auch eine Betätigung durch Zug von Seiten des Verbrennungsmotors möglich, wenn die Kupplung nicht unmittelbar über ihren Kupplungsdeckel an die Kurbelwelle des Verbrennungsmotors angeflanscht wäre.

Die Erfindung wird nun nachfolgend anhand von Figuren näher erläutert, in welchem Zusammenhang verschiedene Ausführungsbeispiele dargestellt sind.

Es zeigen:
- Fig. 1: eine perspektivische Darstellung einer in Längsrichtung geschnittenen erfindungsgemäßen Kupplung nach einem ersten Ausführungsbeispiel, wobei die Kupplung seitens ihres Kupplungsdeckels zu erkennen ist,
- Fig. 2: eine perspektivische Darstellung eines teilweise dargestellten, in Längsrichtung geschnittenen Antriebsstranges samt der Kupplung nach Fig. 1, wobei eine Kupplungsscheibe der Kupplung bereits auf eine Getriebeeingangswelle drehfest aufgeschoben ist und der Kupplungsdeckel der Kupplung bereits an einer Ausgangswelle einer Verbrennungskraftmaschine angelegt ist,
- Fig. 3: eine perspektivische Darstellung eines in Längsrichtung geschnittenen Druckplattenzusammenbaus, wie der in Fig. 1 eingesetzt ist, wobei die verschiedenen Bauteile der Druckplattenbaugruppe gut zu erkennen sind,
- Fig. 4: eine Vorderansicht der Kupplung nach Fig. 1 in einer Vollansicht,
- Fig. 5: eine perspektivische Darstellung einer in der Kupplung nach Fig. 1 eingesetzten Kupplungsscheibe,
- Fig. 6: eine perspektivische Darstellung der in ihrer Längsrichtung geschnittenen Kupplungsscheibe aus Fig. 5,
- Fig. 7: eine perspektivische Darstellung einer in der Kupplung nach Fig. 1 eingesetzten Zusatzfeder / Servofeder,
- Fig. 8: eine perspektivische, teilweise explodierte Darstellung der in Fig. 1 abgebildeten, in Längsrichtung geschnittenen Kupplung,
- Fig. 9: eine perspektivische Darstellung einer teilweise explodierten erfindungsgemäßen Kupplung nach einem weiteren, zweiten Ausführungsbeispiel, welches Ausführungsbeispiel sich von dem ersten Ausführungsbeispiel insbesondere dadurch unterscheidet, dass die Kupplungsscheibe im Nabenbereich zweiteilig ausgeführt ist, und
- Fig. 10: eine perspektivische Darstellung der in Längsrichtung geschnittenen Kupplungsscheibe, wie sie in Fig. 9 eingesetzt ist.

Die Figuren sind lediglich schematischer Natur und dienen ausschließlich dem Verständnis der Erfindung. Die gleichen Elemente sind mit denselben Bezugszeichen versehen.

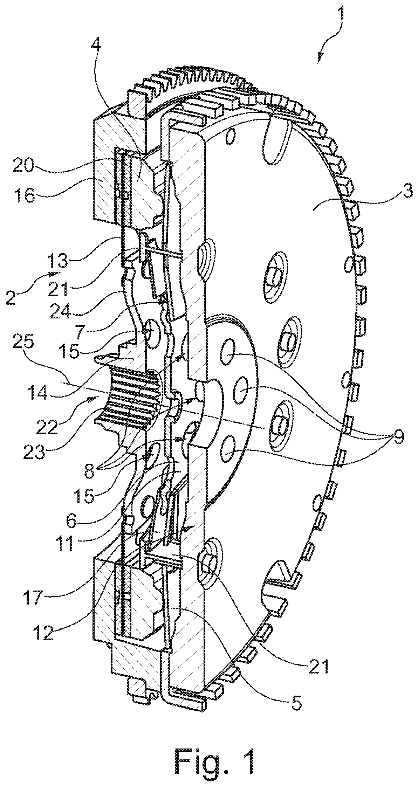

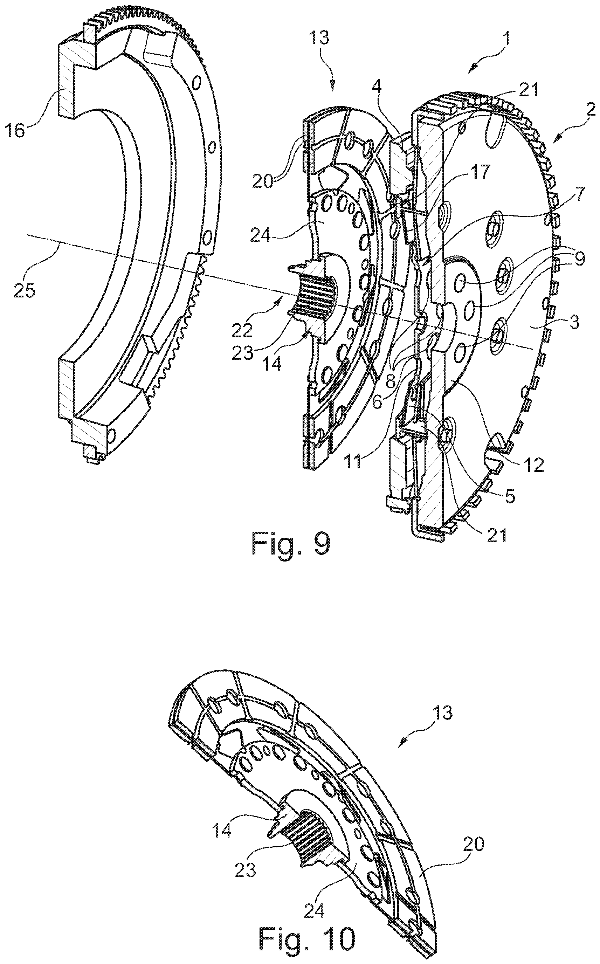

Mit Figuren 1 bis 8 ist eine erfindungsgemäße Kupplung 1 nach einem ersten Ausführungsbeispiel veranschaulicht. Das zweite Ausführungsbeispiel nach den Fign. 9 und 10 ist prinzipiell gemäß dem ersten Ausführungsbeispiel aufgebaut sowie funktionierend, weshalb nachfolgend hinsichtlich dem zweiten Ausführungsbeispiel lediglich die Unterschiede gegenüber dem ersten Ausführungsbeispiel beschrieben sind.

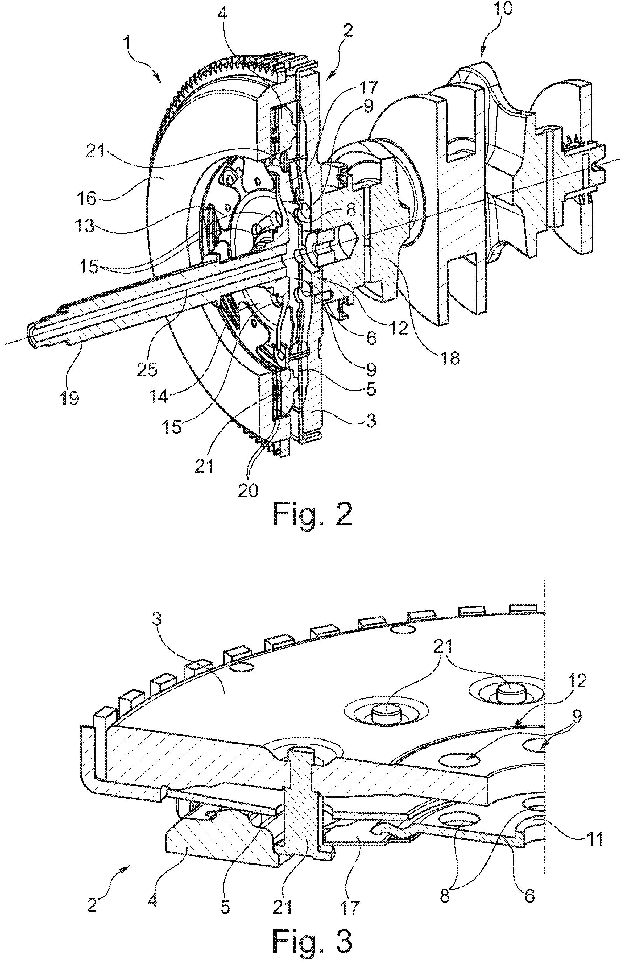

Zurückkommend auf die Kupplung 1 des ersten Ausführungsbeispiels ist deren Aufbau in Fig. 1 gut erkennbar. Wie desweiteren in Fig. 2 dargestellt, dient diese Kupplung 1 auf übliche Weise als entkoppelbare Drehmomentübertragungsvorrichtung, d.h. zum wahlweisen Verbinden bzw. Trennen einer Ausgangswelle 18, in Form einer Kurbelwelle, einer Verbrennungskraftmaschine mit einer Getriebewelle 19 eines Getriebes. Weitere Bestandteile der Verbrennungskraftmaschine sowie des Getriebes sind hier der Übersichtlichkeit halber nicht dargestellt. Die Kupplung 1 ist hierbei als Reibungskupplung sowie als Einscheibenkupplung ausgestaltet.

Die Kupplung 1 weist auf typische Weise einen Kupplungsdeckel 3 auf, der im Betrieb / im montierten Zustand der Kupplung 1 drehfest mit der Ausgangswelle 18 verbunden ist. Drehfest mit dem Kupplungsdeckel 3 ist zudem eine Gegendruckplatte 16 / Druckplatte verbunden. Eine Kupplungsscheibe 13 der Kupplung 1 ist wiederum drehfest mit der Getriebewelle 19 verbunden. Weiterhin ist eine Anpressplatte 4 vorhanden, die in axialer Richtung verschiebbar sowie drehfest an dem Kupplungsdeckel 3 aufgenommen ist. Die Kupplungsscheibe 13 ist so zwischen der Gegendruckplatte 16 und der Anpressplatte 4 angeordnet, dass sie mit ihren radial außen (in Bezug auf eine Drehachse 25 der Kupplung) Reibbelägen 20 in einer eingekuppelten Stellung der Kupplung 1 drehfest durch die Anpressplatte 4 an die Gegendruckplatte 16 angedrückt ist. In einer ausgekuppelten Stellung ist die Anpressplatte 4 derart drucklos relativ zu der Kupplungsscheibe 13 / zu den Reibbelägen sowie der Gegendruckplatte 16 angeordnet, dass kein Drehmoment von der Ausgangswelle 18 auf die Kupplungsscheibe 13 übertragen wird.

Um die Anpressplatte 4 auf typische Weise in axialer Richtung zwischen der eingekuppelten Stellung und der ausgekuppelten Stellung zu verschieben, ist eine Tellerfeder 5 vorgesehen, die mittels eines hier der Übersichtlichkeit halber nicht weiter dargestellten Betätigungssystems, etwa einem Zentralausrücker, in ihrer Schwenkposition zum Erzielen der eingekuppelten bzw. ausgekuppelten Stellung verschwenkt wird. Die Tellerfeder 5 ist verschiebefest mit einem Druckelement 6, das hier als Scheibe ausgebildet ist, gekoppelt. Die Tellerfeder 5 an sich ist um einen Schwenkpunkt, der mittels mehrerer in Umfangsrichtung verteilt angeordneter Zentrierbolzen 21 festgelegt ist, an dem Kupplungsdeckel 3 schwenkbar angebracht. Die Schwenkbewegung der Tellerfeder 5 erfolgt über Nocken im Kupplungsdeckel 3 und an der Anpressplatte 4. Auch dienen die Zentrierbolzen 21 als radiale Sicherung der Tellerfeder 5. Das Druckelement 6 liegt an einem radial innenliegenden Randbereich 7 an der Tellerfeder 5 an. Insbesondere ist die Tellerfeder 5 in diesem Randbereich 7 mit mehreren Tellerfederzungen versehen. Der Randbereich 7 ist jener Bereich, der sich radial innerhalb der Zentrierbolzen 21 befindet.

Das Druckelement 6 ist in diesem Ausführungsbeispiel als eine Blechscheibe / aus Metallblech ausgebildet und daher auch als Druckblech vereinfacht bezeichnet. Das Druckelement 6 erstreckt sich mit einem Scheibenbereich 11 so weit in radialer Richtung nach innen, dass es eine zentrale Durchgangsöffnung 22 in der Kupplungsscheibe 13 teilweise in radialer Richtung nach innen überdeckt. Folglich weist das Druckelement 6 einen kleineren minimalen Durchmesser auf als die Kupplungsscheibe 13.

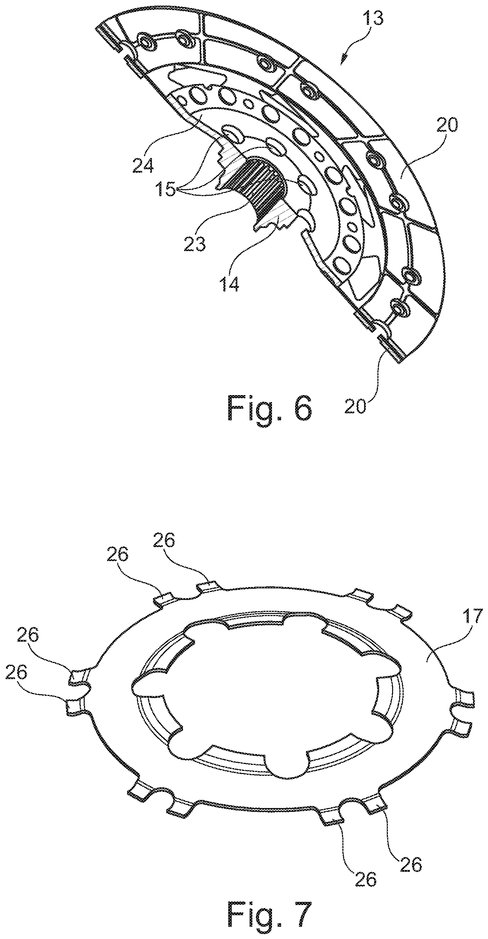

In Fig. 3 ist detailliert erkennbar, dass zur zusätzlichen Abstützung der Tellerfeder 5 eine Zusatzfeder 17 vorgesehen ist, die als Servofeder ausgeführt ist. Die Zusatzfeder 17 ist an dem Zentrierbolzen 21 sowie dem Druckelement 6 abgestützt. Die Zusatzfeder 17 spannt somit indirekt die Tellerfeder 5 in axialer Richtung relativ zum Kupplungsdeckel 3 vor. Die Zusatzfeder 17 alleine betrachtet ist auch in Fig. 7 erkennbar. Für mehrere in Umfangsrichtung verteilt angeordnete Auflagepunkt an einem Zentrierbolzen 21 weist die Servofeder 17 entsprechende ausgeformte Arme / in radialer Richtung nach außen vorstehende Nasen / Vorsprünge 26 auf. Somit liegt die Servofeder 17 an dem Druckelement 6 unter Vorspannung an, sodass und über die Betätigung des Druckelementes 6 die Betätigung der Servofeder 17 erfolgt.

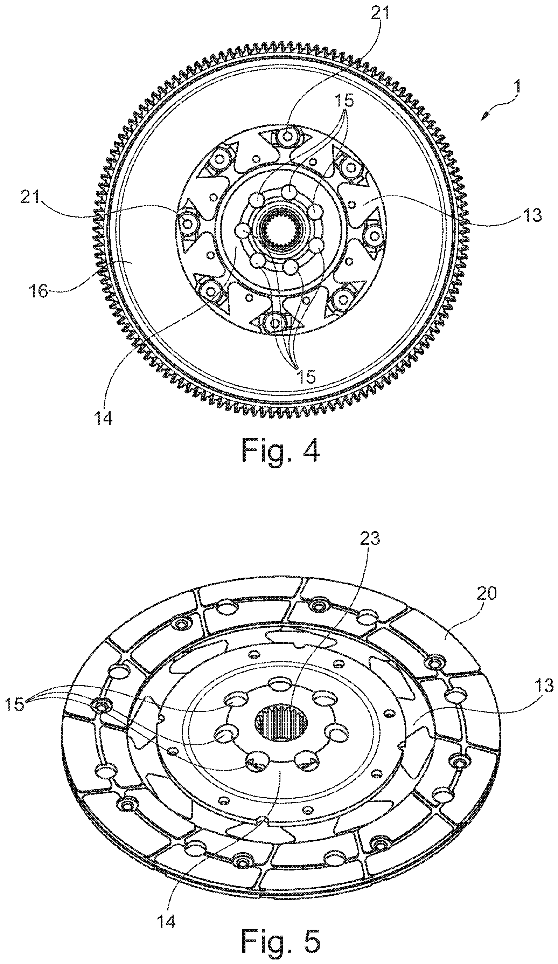

Wie weiterhin in den Fign. 4 bis 6 veranschaulicht, weist die Kupplungsscheibe 13 gemäß dem ersten Ausführungsbeispiel eine einteilige Nabe auf, die somit einen einteiligen Nabenbereich 14 ausbildet. Der Nabenbereich 14 ist als Schmiedeteil ausgebildet. Der Nabenbereich 14 weist auf typische Weise eine die Durchgangsöffnung 22 nach außen begrenzende Kerbverzahnung 23 an einer radialen Innenseite auf, die, wie bereits in Fig. 2 gezeigt, im Betrieb drehfest mit der Getriebewelle 19 verbunden ist. An einem axialen Ende der Kerbverzahnung 23 erstreckt sich der Nabenbereich 14 dann in radialer Richtung, unter Ausbildung eines Verbindungsflansches 24, nach außen. Radial außen sind die Reibbeläge 20 an dem Verbindungsflansch 24 drehfest angebracht.

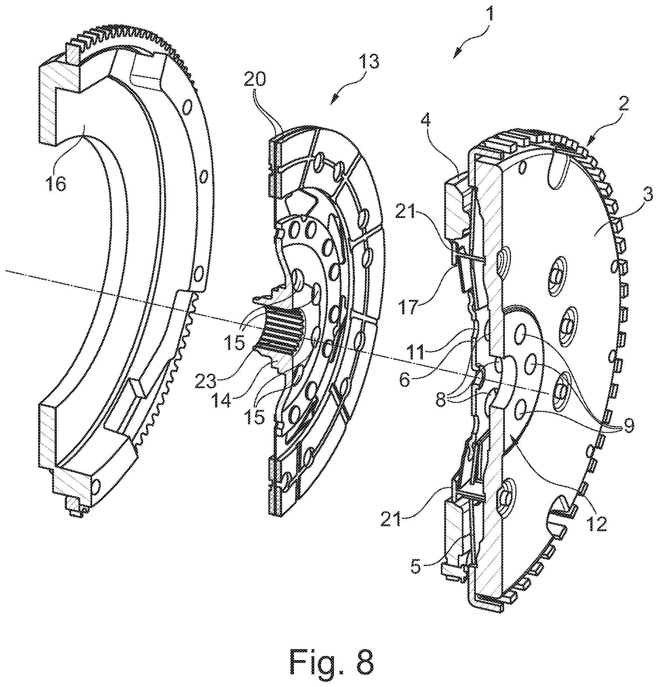

In Fig. 8 ist gezeigt, dass die Kupplung 1 im Wesentlichen aus drei Unterzusammenbauten zusammengesetzt ist. Hierzu ist in der Kupplung 1 die Gegendruckplatte 16, die Kupplungsscheibe 13 sowie eine Druckplattenbaugruppe 2 jeweils als Unterzusammenbau realisiert. Die Druckplattenbaugruppe 2 als ein Unterzusammenbau ist eine vormontierte Einheit und besteht aus mehreren Bestandteilen, insbesondere dem Kupplungsdeckel 3, den an dem Kupplungsdeckel 3 angebrachten Zentrierbolzen 21, der Anpressplatte 4, der Tellerfeder 5, der Zusatzfeder 17 sowie dem Druckelement 6.

Der Kupplungsdeckel 3 ist aus einem Gusswerkstoff, vorzugsweise einem Eisen- oder Stahlgusswerkstoff, hergestellt. An einem sich radial innen befindlichen Bereich bildet der Kupplungsdeckel 3 einen Flanschbereich 12 aus, der zur Befestigung an einer Stirnseite der Ausgangswelle 18 vorbereitet ist. Insbesondere weist dieser Flanschbereich 12 mehrere Durchgangslöcher 9 auf, die nachfolgend als zweite Durchgangslöcher 9 bezeichnet sind. Die zweiten Durchgangslöcher 9 sind in Umfangsrichtung verteilt angeordnet. Mehrere ebenfalls in Umfangsrichtung verteilt angeordnete erste Durchgangslöcher 8 sind in dem Druckelement 6, nämlich in dem Scheibenbereich 11, eingebracht. Flanschbereich 12 und Druckelement 6 sind so in axialer Richtung nebeneinander angeordnet sowie in radialer Richtung relativ zueinander ausgerichtet, dass jedes erste Durchgangsloch 8 mit einem zweiten Durchgangsloch 9 (in axialer Richtung der Kupplung 1 / der Drehachse 25) fluchtet. Zudem sind die zweiten Durchgangslöcher 9 im Durchmesser kleiner als die ersten Durchgangslöcher 8 ausgebildet.

Desweiteren ist in Fig. 8 erkennbar, dass auch die Kupplungsscheibe 13 wiederum mehrere dritte Durchgangslöcher 15 aufweist. Diese dritten Durchgangslöcher 15 sind im Nabenbereich 14 eingebracht. Auch die dritten Durchgangslöcher 15 durchdringen, wie bereits die jeweiligen Durchgangslöcher 8 und 9 das Druckelement 6 bzw. den Kupplungsdeckel 3, den Nabenbereich 14 in axialer Richtung. Die dritten Durchgangslöcher 15 sind entlang einer Umfangsrichtung wiederum verteilt angeordnet. Die dritten Durchgangslöcher 15 sind wiederum auf die ersten und zweiten Durchgangslöcher 8 und 9 so abgestimmt, dass sie ebenfalls jeweils mit einem der ersten Durchgangslöcher 8 und einem der zweiten Durchgangslöcher 9 fluchten. Somit wird ein Zugang für ein Werkzeug vorbereitet, um die Kupplungsscheibe 13 und das Druckelement 6 bis hin zu in den zweiten Durchgangslöchern 9 eingeschobenen Befestigungsmittel in Form von Schrauben / Schraubbolzen beim Befestigen der Kupplung 1 an der Ausgangwelle 18 zu durchdringen. Zudem ist der Durchmesser der dritten Durchgangslöcher 15 wiederum größer als der Durchmesser der zweiten Durchgangslöcher 9. Alternativ können die dritten Durchgangslöcher 15 auch gleich groß wie die zweiten Durchgangslöcher 9 gestaltet sein.

Auch ist erkennbar, dass die Gegendruckplatte 16 in ihrem Innendurchmesser größer als ein Außendurchmesser eines gedachten Kreises, auf dem die Durchgangslöcher 8, 9 sowie 15 des Kupplungsdeckels 3, des Druckelements 6 und des Nabenbereichs 14 angeordnet sind, ausgestaltet ist.

Die Druckplatte / Gegendruckplatte 16 ist vorzugsweise aus einem (relativ kostengünstigen) Metallblech und/oder als Schwungrad ausgebildet. Besonders bevorzugt ist die Gegendruckplatte 16 aus einem Gusswerkstoff / Metallgusswerkstoff hergestellt, um eine hohe Masse und Steifigkeit zu realisieren.

Der Nabenbereich 14 kann, wie in dem zweiten Ausführungsbeispiel nach den Fign. 9 und 10 erkennbar, jedoch auch zweiteilig ausgestaltet sein. Zudem kann im Nabenbereich prinzipiell auch auf die dritten Durchgangslöcher 15 verzichtet werden. Bevorzugt ist dann ein die Kerbverzahnung 23 ausbildender Hülsenabschnitt des Nabenbereiches 14 als Schmiedeteil ausgebildet, während der Verbindungsflansch 24 als Blechteil ausgebildet ist. Die zweiteilige Ausführung des Nabenbereiches 14 macht die Kupplung 1 wiederum kostengünstiger.

In anderen Worten ausgedrückt, ist erfindungsgemäß eine Kupplung 1 als besonders einfach montierbare Einheit umgesetzt. Aktuelle Serienkupplungen werden häufig in mehreren Teilen zu dem Kunden geliefert. Dies ist durch die Anbindung der Kupplung 1 (Deckel 3 wird an die Kurbelwelle 8 angeschraubt) und dadurch, dass kein Platz zur Verfügung steht, um die Schrauben / Befestigungsmittel durch die einzelnen Teile durchführen zu können, bedingt. Dieses Problem wird dadurch gelöst, dass alle Teile (Ausrückplatte (Druckelement 6) und ggf. Kupplungsscheibe 13) mit Löchern 8, 15 für die Kurbelwellenschrauben inklusive Werkzeug Platz haben. Es wird über die Form der Teile gewährleistet, dass alle Löcher 8, 9, 15 zueinander fluchten und die Kupplung 1 dadurch problemlos in einem Paket auf die Kurbelwelle 8 montiert werden kann. Ein weiterer Vorteil ist, dass die Kupplungskennlinie / - Unwucht dadurch im Hause gemessen werden kann und diese auch reproduzierbar beim Kunden sind. Des Weiteren wird das erhöhte Fehlerpotential bei der Montage erheblich verringert. Die Kupplungsscheibe 13 kann eine einteilige Schmiedenabe 14 aufweisen oder zweiteilig ausgeführt sein. Die Servofeder 17 hat Ihre Auflagepunkte auf den Tellerfederbolzen (Zentrierbolzen 21) und der Ausrückscheibe (Druckelement 6). Für jeden Auflagepunkt hat die Servofeder 17 entsprechende ausgeformte Arme. Die Auflage auf dem Tellerfederbolzen 21 dient gleichzeitig zur Zentrierung der Servofeder 17. Die Betätigung der Kupplung 1 geschieht bevorzugt über eine Druckstange, die von der Seite des Getriebes durch die Getriebewelle 19 gesteckt wird. Über die Ausrückplatte 6 wird die Tellerfeder 5 betätigt. Im Verschleiß greift die Servofeder 17 ein und wirkt sich kraftreduzierend aus. Die Betätigung der Servofeder 17 erfolgt nicht direkt über die Tellerfeder 5, wie bei den anderen bekannten Anwendungen. Vielmehr liegt die Servofeder 17 an der Ausrückplatte 6 (vorgespannt) an und über die Betätigung der Ausrückplatte 6 erfolgt die Betätigung der Servofeder 17.

Zudem ist die Kupplung 1 Bestandteil eines Kupplungssystems, das zusätzlich ein Betätigungssystem aufweist, das hier der Übersichtlichkeit nicht dargestellt ist. Das Betätigungssystem weist ein Betätigungselement auf, das die Kupplung 1 zwischen ihrer eingekuppelten Stellung und einer ausgekuppelten Stellung verstellt. Das Betätigungselement durchragt die Kupplung 1 teilweise und ist verschiebefest mit dem Druckelement 6 gekoppelt.

### Bezugszeichenliste

- 1: Kupplung
- 2: Druckplattenbaugruppe
- 3: Kupplungsdeckel
- 4: Anpressplatte
- 5: Tellerfeder
- 6: Druckelement
- 7: Randbereich
- 8: erstes Durchgangsloch
- 9: zweites Durchgangsloch
- 10: Antriebsstrang
- 11: Scheibenbereich
- 12: Flanschbereich
- 13: Kupplungsscheibe
- 14: Nabenbereich
- 15: drittes Durchgangsloch
- 16: Gegendruckplatte
- 17: Zusatzfeder
- 18: Ausgangswelle
- 19: Getriebewelle
- 20: Reibbelag
- 21: Zentrierbolzen
- 22: Durchgangsöffnung
- 23: Kerbverzahnung
- 24: Verbindungsflansch
- 25: Drehachse
- 26: Vorsprung

## Patentansprüche

1. Kupplung (1) für einen Antriebsstrang (10) eines Kraftfahrzeuges, mit einer Druckplattenbaugruppe (2), wobei die Druckplattenbaugruppe (2) weiterhin einen Kupplungsdeckel (3), eine verschiebbar an dem Kupplungsdeckel (3) aufgenommene Anpressplatte (4), eine zwischen dem Kupplungsdeckel (3) und der Anpressplatte (4) abgestützte Tellerfeder (5) sowie ein Druckelement (6), das zum Betätigen der Tellerfeder (5) an einem radial innenliegenden Randbereich (7) der Tellerfeder (5) anliegt, aufweist, wobei das Druckelement (6) mit mehreren ersten Durchgangslöchern (8) und der Kupplungsdeckel (3) mit mehreren zweiten Durchgangslöchern (9) versehen sind, wobei jedes erste Durchgangsloch (8) in axialer Richtung der Kupplung (1) fluchtend zu einem zweiten Durchgangsloch (9) ausgerichtet ist, **dadurch gekennzeichnet, dass** der Kupplungsdeckel (3) einen die Tellerfeder (5) in radialer Richtung nach innen überragenden Flanschbereich (12) aufweist, in dem die zweiten Durchgangslöcher (9) eingebracht sind.

2. Kupplung (1) nach Anspruch 1, **dadurch gekennzeichnet, dass** das Druckelement (6) einen sich in radialer Richtung von der Tellerfeder (5) wegerstreckenden Scheibenbereich (11) aufweist, in dem die ersten Durchgangslöcher (8) eingebracht sind.

3. Kupplung (1) nach Anspruch 1 oder 2, **dadurch gekennzeichnet, dass** eine Kupplungsscheibe (13) vorhanden ist, deren Nabenbereich (14) mehrere dritte Durchgangslöcher (15) aufweist.

4. Kupplung (1) nach Anspruch 3, **dadurch gekennzeichnet, dass** jedes dritte Durchgangsloch (15) mit einem ersten Durchgangsloch (8) sowie einem zweiten Durchgangsloch (9) fluchtet.

5. Kupplung (1) nach einem der Ansprüche 1 bis 4, **dadurch gekennzeichnet, dass** die zweiten Durchgangslöcher (9) im Kupplungsdeckel (3) im Durchmesser kleiner als die ersten Durchgangslöcher (8) im Druckelement (6) sind.

6. Kupplung (1) nach einem der Ansprüche 1 bis 5, **dadurch gekennzeichnet, dass** eine ringförmige Gegendruckplatte (16) vorhanden ist, deren Innendurchmesser größer ist als ein Außendurchmesser eines gedachten Kreises, auf dem die Durchgangslöcher (8, 9, 15) des Kupplungsdeckels (3), des Druckelements (6) und/oder des Nabenbereiches (14) angeordnet sind.

7. Kupplung (1) nach einem der Ansprüche 1 bis 6, **dadurch gekennzeichnet, dass** das Druckelement (6) durch eine Zusatzfeder (17) abgestützt ist.

8. Kupplung (1) nach Anspruch 7, **dadurch gekennzeichnet, dass** das Druckelement (6) zwischen der Tellerfeder (5) und der Zusatzfeder (17) angeordnet.

9. Kupplungssystem mit einer Kupplung (1) nach einem der Ansprüche 1 bis 8 sowie einem die Kupplung (1) zwischen einer eingekuppelten Stellung und einer ausgekuppelten Stellung verstellenden Betätigungssystem, wobei das Betätigungssystem ein Betätigungselement aufweist, das, die Kupplung (1) teilweise durchragend, verschiebefest mit dem Druckelement (6) gekoppelt ist.

## Claims

1. A clutch (1) for a drive train (10) of a motor vehicle, comprising a pressure plate assembly (2), wherein the pressure plate assembly (2) further comprises a clutch cover (3), a pressure plate (4) displaceably received on the clutch cover (3), a diaphragm spring (5) supported between the clutch cover (3) and the pressure plate (4), and a pressure element (6) that bears against a radially inner edge region (7) of the diaphragm spring (5) in order to actuate the diaphragm spring (5), the pressure element (6) is provided with a plurality of first through-holes (8) and the clutch cover (3) is provided with a plurality of second through-holes (9), each first through-hole (8) being aligned with a second through-hole (9) in the axial direction of the clutch (1), **characterized in that** the clutch cover (3) has a flange region (12) which projects inwards beyond the diaphragm spring (5) in the radial direction and into which the second through-holes (9) are introduced.

2. The clutch (1) according to claim 1, **characterized in that** the pressure element (6) has a disc region (11) extending away from the diaphragm spring (5) in the radial direction and in which the first through-holes (8) are introduced.

3. The clutch (1) according to claim 1 or 2, **characterized in that** a clutch disc (13) is present, the hub region (14) of which has a plurality of third through-holes (15).

4. The clutch (1) according to claim 3, **characterized in that** each third through-hole (15) is aligned with a first through-hole (8) and a second through-hole (9).

5. The clutch (1) according to one of claims 1 to 4, **characterized in that** the second through-holes (9) in the clutch cover (3) are smaller in diameter than the first through-holes (8) in the pressure element (6).

6. The clutch (1) according to one of claims 1 to 5, **characterized in that** an annular counter-pressure plate (16) is present, the inner diameter of which is greater than an outer diameter of an imaginary circle on which the through-holes (8, 9, 15) of the clutch cover (3), the pressure element (6) and/or the hub region (14) are arranged.

7. The clutch (1) according to one of claims 1 to 6, **characterized in that** the pressure element (6) is supported by an additional spring (17).

8. The clutch (1) according to claim 7, **characterized in that** the pressure element (6) is arranged between the diaphragm spring (5) and the additional spring (17).

9. A clutch system with a clutch (1) according to one of claims 1 to 8 and an actuating system which adjusts the clutch (1) between an engaged position and a disengaged position, wherein the actuating system has an actuating element which, partially projecting through the clutch (1), is coupled to the pressure element (6) in a non-displaceable manner.

## Revendications

1. Embrayage (1) pour une transmission (10) d'un véhicule automobile, avec un ensemble de plateaux de pression (2), l'ensemble de plateaux de pression (2) comprenant en outre un capot d'embrayage (3), un plateau de pression (4) logé de manière coulissante sur le capot d'embrayage (3), un ressort à disques (5) accoté entre le capot d'embrayage (3) et le plateau de pression (4) et un élément de pression (6) lequel pour actionner le ressort à disques (5), bute contre une zone marginale radiale intérieure (7) du ressort à disques (5), l'élément de pression (6) étant pourvu de plusieurs premiers trous traversants (8) et le capot d'embrayage (3) étant pourvu de plusieurs seconds trous traversants (9), chaque premier trou traversant (8) étant aligné dans le sens axial de l'embrayage (1) avec un second trou traversant (9), **caractérisé en ce que** le capot d'embrayage (3) présente une zone de bride (12) qui fait saillie vers l'intérieur du ressort à disques (5) dans le sens radial, les seconds trous traversants (9) étant placés dans ladite zone.

2. Embrayage (1) selon la revendication 1, **caractérisé en ce que** l'élément de pression (6) présente une zone de rondelles (11) s'éloignant dans le sens radial du ressort à disques (5), les premiers trous traversants (8) étant placés dans ladite zone.

3. Embrayage (1) selon la revendication 1 ou 2, **caractérisé en ce qu'**un disque d'embrayage (13) est présent, la zone de moyeu (14) présentant plusieurs troisièmes trous traversants (15).

4. Embrayage (1) selon la revendication 3, **caractérisé en ce que** chaque troisième trou traversant (15) est aligné avec un premier trou traversant (8) et un second trou traversant (9).

5. Embrayage (1) selon l'une des revendications 1 à 4, **caractérisé en ce que** les seconds trous traversants (9) dans le capot d'embrayage (3) ont un diamètre inférieur aux premiers trous traversants (8) dans l'élément de pression (6).

6. Embrayage (1) selon l'une des revendications 1 à 5, **caractérisé en ce qu'**une plaque annulaire de contre-pression (16) est présente, dont le diamètre intérieur est supérieur à un diamètre extérieur d'un cercle imaginaire sur lequel sont disposés les trous traversants (8, 9, 15) du capot d'embrayage (3), de l'élément de pression (6) et/ou de la zone de moyeu (14).

7. Embrayage (1) selon l'une des revendications 1 à 6, **caractérisé en ce que** l'élément de pression (6) est supporté par un ressort supplémentaire (17).

8. Embrayage (1) selon la revendication 7, **caractérisé en ce que** l'élément de pression (6) est intercalé entre le ressort à disques (5) et le ressort supplémentaire (17).

9. Système d'embrayage avec un embrayage (1) selon l'une des revendications 1 à 8 et un système d'actionnement ajustant l'embrayage (1) entre une position embrayée et une position débrayée, ledit système d'actionnement ayant un élément d'actionnement lequel, traversant partiellement l'embrayage (1), est couplé de manière non coulissante à l'élément de pression (6).
